# EUROPÄISCHE PATENTSCHRIFT

(11) **EP 2 394 197 B1**
(45) Veröffentlichungstag und Bekanntmachung des Hinweises auf die Patenterteilung: **26.07.2017**
(21) Anmeldenummer: 10703010.8
(22) Anmeldetag: 02.02.2010
(51) Int. Cl.: G03B 9/08, G03B 9/22

(54) **ZENTRALVERSCHLUSS FÜR KAMERA-OBJEKTIVE**
CENTRAL SHUTTER FOR CAMERA OBJECTIVES
OBTURATEUR CENTRAL POUR OBJECTIFS D'APPAREILS PHOTOGRAPHIQUES

(30) Priorität: 05.02.2009 DE 202009009522 U; 15.06.2009 DE 102009025320
(43) Veröffentlichungstag der Anmeldung: 14.12.2011
(73) Patentinhaber: Leica Camera AG, 35606 Solms (DE)
(72) Erfinder: AAB, Konstantin, 34295 Edermünde-Grifte (DE)
(74) Vertreter: Stamer, Harald
(86) Internationale Anmeldenummer: PCT/EP2010/000605
(87) Internationale Veröffentlichungsnummer: WO 2010/089075

(56) Entgegenhaltungen:
- GB-A- 884 180
- GB-A- 1 036 974
- US-A- 2 269 400
- US-A- 3 164 077
- US-A1- 2003 161 625

## Beschreibung

Die Erfindung betrifft einen Zentralverschluß für Kamera-Objektive mit einem ringförmigen, die Verschlußöffnung umgreifenden Lamellenträger, auf dem mindestens zwei kreissymmetrisch zueinander angeordnete ortsfeste Zapfen angeordnet sind, auf denen sichelförmige Verschlußlamellen schwenkbar gelagert sind, und mit einem die Verschlußlamellen über die Verschlußöffnung schwenkenden motorischen Antrieb.

Aus AT 254 689 B ist ein selbstspannender Zentralverschluß für fotografische Zwecke bekannt, bei dem eine Grundplatte eine zentrale Lichtdurchgangsöffnung enthält. An der Grundplatte sind zwei Verschlußlamellen um diametral zueinander liegende ortsfeste Zapfen schwenkbar gelagert. Zum Verschwenken der Verschlußlamellen aus der Schließ- in die Offenstellung und umgekehrt ist ein Lamellenbetätigungsteil vorgesehen, der als Antriebsring ausgebildet ist. Der Antriebsring ist um einen die Lichtdurchtrittsöffnung umgebenden Flansch der Grundplatte schwenkbar gelagert. Er besitzt einander diametral gegenüber liegende Arme, die mit fest in ihnen sitzenden Bolzen in Schlitze in den Verschlußlamellen eingreifen. Die Schlitze verlaufen radial zu den Zapfen, um die die Verschlußlamellen schwenkbar sind. Die Bolzen sind in kreisbogenförmigen Schlitzen in der Grundplatte geführt.

Zum Verschwenken des Antriebsringes dient ein Hebelgetriebe, das einen Treibhebel aufweist. Der Treibhebel ist um eine in der Grundplatte sitzende Drehachse schwenkbar gelagert und durch eine Zugfeder belastet. Der Treibhebel bildet zusammen mit einem Schwinghebel ein Kniehebelpaar. Der Schwinghebel ist schwenkbar an den Antriebsring angelenkt. Mit dem Treibhebel gekoppelt sind ein manuell betätigbarer Spann- und Auslösehebel.

Beim Spannen wird die am Treibhebel befestigte Zugfeder gespannt und der am Antriebsring befestigte Schwinghebel zieht die Verschlußlamellen in die Offenstellung. Beim Auslösen wird der Treibhebel durch Federspannung zurückgezogen und der Schwinghebel dreht den Antriebsring zurück in die Schließstellung.

Der mechanische Aufwand an Teilen ist groß und die Vielzahl von Lager- und Führungselementen erhöht die Gefahr des Verschleißens und Schwingens der beschleunigten Teile. Die erreichbaren kurzen Öffnungszeiten sind nicht befriedigen.

Aus DE 2 251 758 ist ein fotografischer Zentralverschluß bekannt, bei dem auf einem Lamellentragring kreissymmetrisch verteilt mehrere Bolzen als Drehlager für die Verschlußlamellen angeordnet sind. Die Verschlußlamellen enthalten jeweils ein in radialer Richtung vom Drehlager beabstandetes Loch, in das jeweils ein auf einem Antriebsring befestigter Bolzen eingreift. Über ein motorisch angetriebenes Hebelwerk kann der Antriebsring vor- und zurückgestellt werden, wodurch die Verschlußlamellen in die Verschlußöffnung hinein und aus dieser heraus bewegt werden.

Zum Öffnen und Schließen des Zentralverschlusses muß die Drehrichtung des Antriebsmotors umgeschaltet werden. Die dabei notwendigerweise entstehenden Totzeiten begrenzen die erreichbaren kurzen Öffnungszeiten. Für eine schnell beschleunigte Drehung des Antriebsringes sind kräftige Motoren mit einem entsprechenden Energiebedarf notwendig. Der Motor und eine Batterie zur Stromerzeugung sind im Kameragehäuse angeordnet und getrieblich mit dem Zentralverschluß gekoppelt. Die bei der Beschleunigung der Verschlußlamellen auf die Antriebslöcher einwirkenden Kräfte sind groß und führen zu einem frühen Verschleiß und zu relativ lauten Geräuschen.

Ein weiterer Zentralverschluss ist in GB1036974A gezeigt. Der Erfindung lag daher die Aufgabe zugrunde, den Bauteileaufwand zu reduzieren und damit den Bauraum zu verkleinern, den Stromverbrauch der Antriebsmotoren zu verringern und gleichzeitig die kurzen Öffnungszeiten weiter herabzusetzen. Die Kraftübertragung beim Verschwenken der Verschlußlamellen sollte verschleiß-, geräusch- und schwingungsarm sein. Der Zentralverschluß sollte mit seines elektromotorischen Antrieben als kompakte Baugruppe in Wechselobjektive für fotografische Kameras einsetzbar sein.

Diese Aufgabe wird bei einem Zentralverschluß der eingangs genannten Art erfindungsgemäß durch die kennzeichnenden Merkmale des Anspruchs 1 gelöst. Vorteilhafte Weiterbildungen ergeben sich aus den Merkmalen der Unteransprüche.

Der Kerngedanke der Erfindung besteht in der Zweiteilung des Antriebs zum Verschwenken der Verschlußlamellen. Der motorisch drehbare Aufzugsring kann mit einem Motor geringer Leistungsaufnahme stetig und unabhängig von der Bewegung der Verschlußlamellen angetrieben werden. Durch die Drehung des Aufzugsringes kann bei blockiertem Nockenring die zwischen den beiden Elementen eingehängte Zugfeder gespannt werden. Die in den Zugfedern dann gespeicherte Energie dient nachfolgend nach Freigabe des Nockenringes zum Verschwenken der mit dem Nockenring gekoppelten Verschlußlamellen.

Der zum Antrieb des Motors benötigte geringe elektrische Strom kann von einer im Kameragehäuse untergebrachten Batterie gefahrlos über Kontakte in der Anriegelebene des Wechselobjektivs übertragen werden. Bei höheren Stromstärken für starke Motoren mit schnellen Anlaufzeiten besteht die Gefahr, daß bei fehlerhaften Kontaktstellen die Kontakte heiß werden und beschädigt werden können.

Der Aufzugsring wird zweckmäßigerweise als Zahnrad mit am äußeren Umfang angebrachtem Zahnkranz ausgebildet. Dieser kann über ein geeignetes Getriebe mit dem Motor in Eingriff gebracht werden.

Die sägezahnförmigen Nocken auf dem Nockenring sind so ausgebildet, daß die in der durch die Spannrichtung der Zugfedern vorgegebenen Drehrichtung vordere Flanke die steilere ist. Zur Blockierung der Drehbarkeit des Nockenringes relativ zum Lamellenträger ist an dem Lamellenträger mindestens eine Klinke schwenkbar gelagert, die zwischen die Nocken einfallen und an einer vorderen Flanke der Nocken zur Anlage kommen kann.

Die Klinke ist dabei so zu positionieren, daß sie bei Anlage an einer vorderen Flanke eines Nockens die mit dem Nockenring gekoppelten Verschlußlamellen in einer die Verschlußöffnung schließenden Stellung und/oder in einer aus der Verschlußstellung ausgeschwenkten Stellung hält.

Mit Vorteil werden eine separate Auslöseklinke für die Schließstellung und eine separate Halteklinke für die Offenstellung der Verschlußlamellen vorgesehen. Die Schwenkbewegung der einen oder mehreren Klinken ist motorisch steuerbar.

In einer besonderen Ausführungsform besteht die Kopplung der Verschlußlamellen zum Nockenring darin, daß die Verschlußlamellen mit einem unter Federvorspannung stehenden Schwenkhebel so verbunden sind, daß dieser bei Drehung des Nockenringes durch eine vordere Flanke eines Nockens gegen die Federvorspannung die Verschlußlamellen in die Offenstellung schwenkt und nach Überlaufen eines Nockenkopfes durch die Federvorspannung die Verschlußlamellen wieder in die Schließstellung schwenkt. Eine Auslöseklinke ist dabei so positioniert, daß sie im eingeschwenkten Zustand die Verschlußlamellen in der Schließstellung hält. Eine Halteklinke ist so positioniert, daß sie im eingeschwenkten Zustand den Schwenkhebel in der Auflage auf einem Nockenkopf und damit die Verschlußlamellen in der Offenstellung hält.

In der Zeichnung ist ein Ausführungsbeispiel des erfindungsgemäßen Zentralverschlusses schematisch dargestellt und wird nachfolgend anhand der Figuren näher beschrieben. Dabei zeigen:
- Fig.1: die Antriebsseite des Lamellenträgers,
- Fig.2: die Lamellenseite des Lamellenträgers mit in die Verschlußöffnung eingeschwenkten Verschlußlamellen,
- Fig.3: die Lamellenseite mit teilweise ausgeschwenkten Verschlußlamellen und
- Fig.4: die Lamellenseite mit aus der Verschlußöffnung ausgeschwenkten Verschlußlamellen.

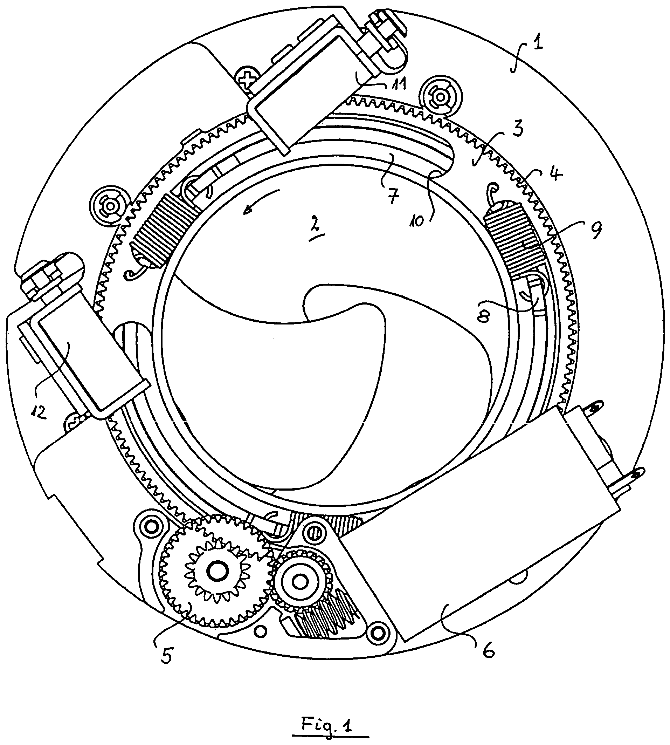

Der in Fig.1 dargestellte ringförmige Lamellenträger 1 umschließt die Verschlußöffnung 2. In den an die Verschlußöffnung 2 angrenzenden Teil ist ein Aufzugsring 3 in den Lamellenträger 1 eingefügt. Der Aufzugsring 3 ist als flache Ringscheibe ausgebildet, die an ihrem äußeren Umfang einen Zahnkranz 4 trägt. Der Zahnkranz 4 steht mit einem Motorgetriebe 5 im Eingriff, das von einem Elektromotor 6 angetrieben wird.

In dem Aufzugsring 3 ist ein ebenfalls als flache Ringscheibe ausgebildeter Nockenring 7 drehbar gelagert. Von dem Nockenring 7 ist in dieser Darstellung nur ein stegförmiger Ring 8 sichtbar, in den eine Zugfeder 9 eingehängt ist. Mit ihrem anderen Ende ist die Zugfeder 9 in den Aufzugsring 3 eingehängt. Nach Blockieren der Drehbarkeit des Nockenringes 7 bewegt sich beim Spannen der Zugfeder 9 in der durch einen Pfeil dargestellten Richtung der stegförmige Ring 8 in einem kreissegmentförmigen Ausschnitt 10 im Aufzugsring 3.

Auf der in Fig.1 dargestellten Antriebsseite des Lamellenträgers 1 sind außerdem noch Stellmotoren 11, 12 zur Betätigung von Klinken angeordnet, die mit dem Nockenring 7 zusammenwirken.

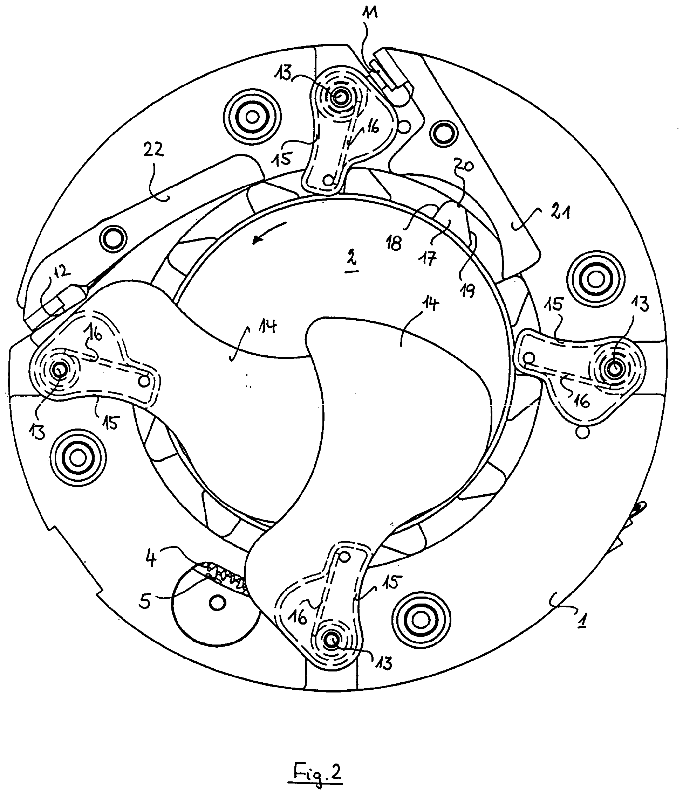

Fig.2 zeigt die hinter der Antriebsseite liegende Lamellenseite des Lamellenträgers 1, und zwar in einer Durchsicht durch die Antriebsseite. Die Lage der auf der Lamellenseite gezeigten Elemente korrespondiert direkt mit den zugehörigen Teilen, die in der Ebene der Antriebsseite liegen, wie an dem ausschnittsweise dargestellten Motorgetriebe 5 und dem Zahnkranz 4 erkennbar ist.

Auf dem Lamellenträger 1 sind kreissymmetrisch zueinander vier Zapfen 13 angeordnet, auf denen sichelförmige Verschlußlamellen 14 schwenkbar gelagert sind. Die Verschlußlamellen 14 sind jeweils mit Schwenkhebeln 15 verbunden, die über eine auf den Zapfen 13 aufgeschobene Drehfeder 16 unter einer Vorspannung stehen, die die Schwenkhebel und damit die Verschlußlamellen 14 in die Verschlußöffnung 2 hinein schwenkt.

Auf dem Nockenring 7 liegend sind in dieser Darstellung Nocken 17 sichtbar, deren in Drehrichtung vordere Flanke 18 steiler als die hintere Flanke 19 ist. Der den Übergang von der vorderen zur hinteren Flanke bildende Nockenkopf 20 ist abgerundet. Die Nockenköpfe 20 liegen auf einem Ring konzentrisch zur Mitte der Verschlußöffnung 2.

Auf dem Lamellenträger 1 sind weiterhin eine Auslöseklinke 21 und eine Halteklinke 22 schwenkbar gelagert. Die Schwenkstellung der Klinken 21, 22 kann durch die Stellmotoren 11, 12 motorisch verändert werden. In der in Fig.2 dargestellten Schwenkstellung liegt die Auslöseklinke 21 an einer vorderen Flanke 18 einer Nocke 17 an und blockiert damit die Drehbarkeit des Nockenringes 7. Die Halteklinke 22 liegt auf einem Nockenkopf 20 auf und kann bei Freigabe der Drehung des Nockenringes 7 in den nachfolgenden Raum zwischen aufeinander folgende Nocken 17 eingeschwenkt werden.

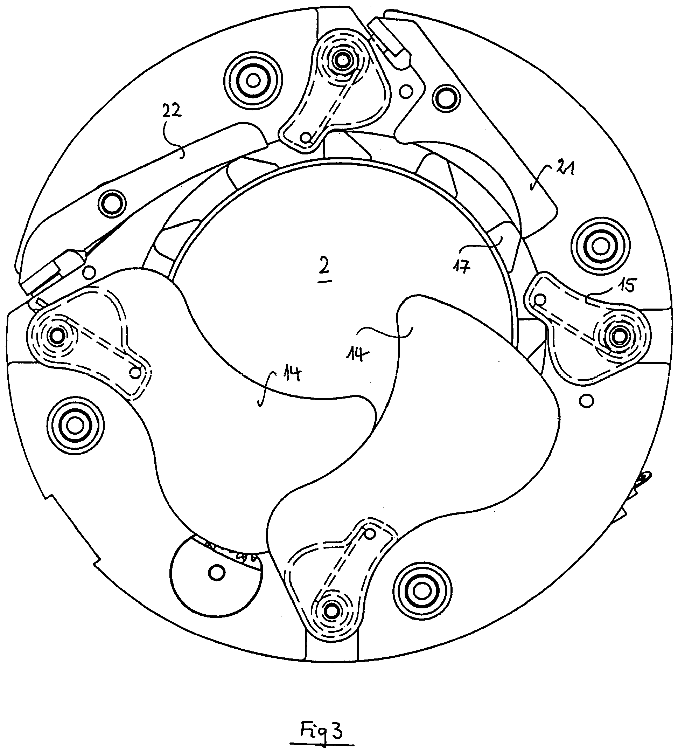

Bei der in Fig.2 gezeigten Stellung der Auslöseklinke 21 liegen die Schwenkhebel 15 jeweils an einer vorderen Flanke 18 einer Nocke 17 an und sind dadurch mit dem Nockenring 7 gekoppelt. Bei Freigabe der Drehbarkeit des Nockenringes 7 durch Ausschwenken des Auslösehebels 21 heben die sich in Pfeilrichtung bewegenden Nocken 17 die Schwenkhebel 15 an und schwenken die mit ihnen verbundenen Verschlußlamellen 14 aus der Verschlußöffnung 2 heraus (Fig.3).

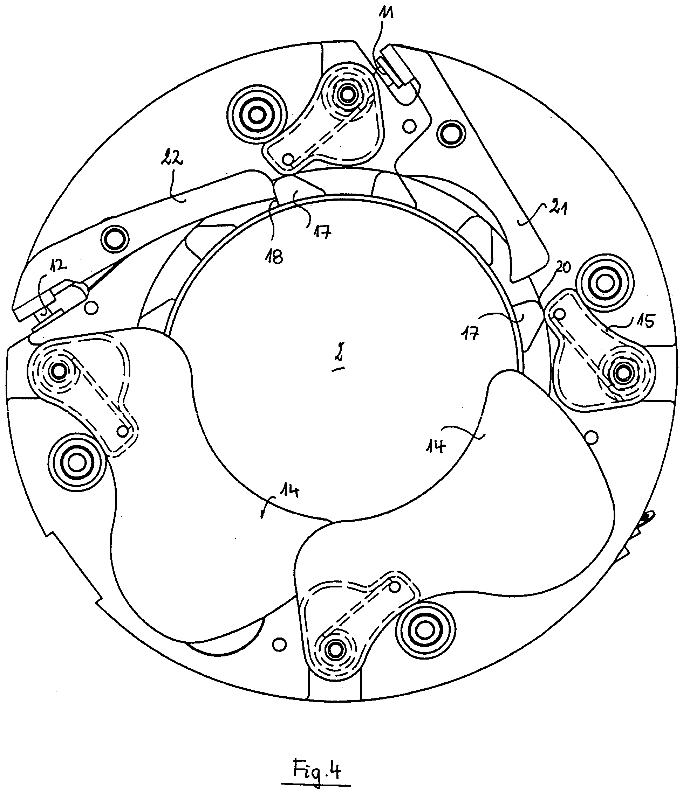

Bei der in Fig.4 dargestellten Verschlußposition ist die Halteklinke 22 zwischen zwei Nocken 17 eingefallen und liegt an einer vorderen Flanke 18 eines Nockens 17 an. Die Halteklinke 22 ist so positioniert und bemessen, daß in der dargestellten Stellung gleichzeitig die Schwenkhebel 15 auf einem Nockenkopf 20 aufliegen. Das ist die Stellung, in der die Verschlußlamellen 14 vollständig aus der Verschlußöffnung 2 herausgeschwenkt sind. Beim Einbau des Zentralverschlusses in eine Objektiv für eine Spiegelreflexkamera kann diese Stellung insbesondere für die Motivsuche genutzt werden.

Nach dem Ausschwenken der Halteklinke 22 kann sich der Nockenring 7 unter der Einwirkung der gespannten Zugfeder 9 weiter in der Pfeilrichtung drehen. Dabei fallen die Schwenkhebel 15 unter Einwirkung der Drehfedern 16 an der hinteren Flanke 19 der Nocken 17 entlang in die Verschlußstellung zurück und die Auslöseklinke 21 blockiert wieder durch Anlage an einer vorderen Flanke 18 der Nocken 17 den Nockenring 7. Die Zugfedern 9 können während des Verschlußablaufs wieder bis in eine Endstellung hinein gespannt werden, so daß der Zentralverschluß für einen weiteren Verschlußablauf vorbereitet ist.

### Bezugszeichenliste

- 1: Lamellenträger
- 2: Verschlußöffnung
- 3: Aufzugsring
- 4: Zahnkranz
- 5: Motorgetriebe
- 6: Elektromotor
- 7: Nockenring
- 8: stegförmiger Ring
- 9: Zugfeder
- 10: kreissegmentförmiger Ausschnitt
- 11,12: Stellmotoren
- 13: Zapfen
- 14: Verschlußlamellen
- 15: Schwenkhebel
- 16: Drehfedern
- 17: Nocken
- 18: vordere Flanke der Nocken
- 19: hintere Flanke der Nocken
- 20: Nockenkopf
- 21: Auslöseklinke
- 22: Halteklinke

## Patentansprüche

1. Zentralverschluß für Kamera-Objektive mit einem ringförmigen, die Verschlußöffnung (2) umgreifenden Lamellenträger (1), auf dem mindestens zwei kreissymmetrisch zueinander angeordnete Zapfen (13) angeordnet sind, auf denen sichelförmige Verschlußlamellen (14) schwenkbar gelagert sind, und mit einem die Verschlußlamellen (14) über die Verschlußöffnung (2) schwenkenden elektromotorischen Antrieb, **dadurch gekennzeichnet, daß** der Antrieb
a) einen als flache Ringscheibe ausgebildeten, motorisch drehbaren Aufzugsring (3) enthält, der auf dem Lamellenträger (1) aufliegt,
b) in dem Aufzugsring (3) ein als flache Ringscheibe ausgebildeter Nockenring (7) drehbar gelagert ist, auf dessen einer Ringfläche sägezahnförmige Nocken (17) aufgebracht sind, wobei
c) der Aufzugsring (3) und der Nockenring (7) über mindestens eine in Drehrichtung des Aufzugsrings (3) spannbare Zugfeder (9) miteinander gekoppelt sind und
d) die Schwenkbewegung der Verschlußlamellen (14) durch Kopplung mit dem Nockenring (7) steuerbar ist, wobei die Verschlußlamellen (14) mit einem unter Federvorspannung stehenden Schwenkhebel (15) so verbunden sind, daß dieser bei Drehung des Nockenrings (7) durch eine vordere Flanke (18) eines Nockens (17) gegen die Federvorspannung die Verschlußlamellen (14) in die Offenstellung schwenkt und nach Überlaufen eines Nockenkopfes (20) durch seine Federvorspannung die Verschlußlamellen (14) in die Schließstellung schwenkt.

2. Zentralverschluß nach Anspruch 1, **dadurch gekennzeichnet, daß** der Aufzugsring (3) als Zahnrad mit am äußeren Umfang angebrachtem Zahnkranz (4) ausgebildet ist, die mit einem Motorgetriebe (5) im Eingriff stehen.

3. Zentralverschluß nach Anspruch 1, **dadurch gekennzeichnet, daß** die in Drehrichtung des Nockenrings (7) vordere Flanke (18) der Nocken (17) steil ist.

4. Zentralverschluß nach Anspruch 1, **dadurch gekennzeichnet, daß** der Nockenring (7) gegenüber dem Lamellenträger (1) blockierbar ist.

5. Zentralverschluß nach Anspruch 4, **dadurch gekennzeichnet, daß** an dem Lamellenträger (1) mindestens eine den Nockenring (7) durch Anlage an einer in Drehrichtung vorderen Flanke (18) eines Nockens (17) blockierende Klinke (21, 22) schwenkbar gelagert ist.

6. Zentralverschluß nach Anspruch 5, **dadurch gekennzeichnet, daß** die Klinke (21, 22) so positioniert ist, daß sie bei Anlage an einer vorderen Flanke (18) eines Nockens (17) die mit dem Nockenring (7) gekoppelten Verschlußlamellen (14) in einer die Verschlußöffnung (2) schließenden Stellung und / oder in einer aus der Verschlußöffnung (2) ausgeschwenkten Stellung hält.

7. Zentralverschluß nach Anspruch 6, **dadurch gekennzeichnet, daß** eine Auslöseklinke (21) für die Schließstellung und eine Halteklinke (22) für die Offenstellung der Verschlußlamellen (14) vorgesehen sind.

8. Zentralverschluß nach Anspruch 5, **dadurch gekennzeichnet, daß** die Schwenkbewegung der Klinke (21, 22) motorisch steuerbar ist.

## Claims

1. Central shutter for camera objectives, said central shutter having a ring-shaped leaf carrier (1) surrounding the shutter aperture (2), on which leaf carrier at least two studs (13) are disposed arranged in a circularly symmetrical manner in relation to each other, on which studs sickle-shaped shutter leaves (14) are pivotably mounted, and having an electric motor drive pivoting the shutter leaves (14) over the shutter aperture (2), **characterized in that** the drive
a) includes a motorized rotatable winding ring (3) which is realized as a flat ring disk and rests on the leaf carrier (1),
b) a cam ring (7) realized as a flat ring disk is rotatably mounted in the winding ring (3), sawtooth-shaped cams (17) being provided on a ring surface thereof, wherein
c) the winding ring (3) and the cam ring (7) are coupled to each other by means of at least one tension spring (9) that can be tensioned in the direction of rotation of the winding ring (3) and
d) the pivoting movement of the shutter leaves (14) can be controlled by coupling to the cam ring (7), wherein the shutter leaves (14) are connected to a pre-biased spring-loaded pivot lever (15) such that when the cam ring (7) is rotated, said pivot lever pivots the shutter leaves (14) into the open position by means of a front flank (18) of a cam (17) in opposition to the pre-biased spring-loading, and when a cam head (20) is passed over, pivots the shutter leaves (14) into the closed position by means of its pre-biased spring loading.

2. Central shutter according to Claim 1, **characterized in that** the winding ring (3) is realized as a toothed wheel with a toothed ring (4) mounted on the outer circumference, which meshes with a motorized gearing (5).

3. Central shutter according to Claim 1, **characterized in that** the front flank (18) of the cam (17), in the direction of rotation of the cam ring (7), is steep.

4. Central shutter according to Claim 1, **characterized in that** the cam ring (7) can be blocked in relation to the leaf carrier (1).

5. Central shutter according to Claim 4, **characterized in that** at least one catch (21, 22) blocking the cam ring (17) by abutment against a front flank (18) of a cam (17), in the direction of rotation, is pivotably mounted on the leaf carrier (1).

6. Central shutter according to Claim 5, **characterized in that** the catch (21, 22) is positioned such that when it abuts against a front flank (18) of a cam (17), it holds the shutter leaves (14) coupled to the cam ring (7) in a position closing the shutter aperture (2) and / or in a position pivoted out of the shutter aperture (2).

7. Central shutter according to Claim 6, **characterized in that** a release catch (21) is provided for the closed position and a detent catch (22) is provided for the open position of the shutter leaves (14).

8. Central shutter according to Claim 5, **characterized in that** the pivoting movement of the catch (21, 22) can be controlled by a motor.

## Revendications

1. Obturateur central pour des objectifs d'appareils photographiques avec un porte-lamelles annulaire (1) entourant l'ouverture d'obturateur (2), sur lequel sont disposés au moins deux tourillons (13) disposés en symétrie circulaire l'un par rapport à l'autre, sur lesquels des lamelles d'obturateur en forme de croissant (14) sont montées de façon pivotante, et avec un entraînement par moteur électrique faisant pivoter les lamelles d'obturateur (14) au-dessus de l'ouverture d'obturateur (2), **caractérisé en ce que** l'entraînement
a) contient une bague de levage (3) rotative motorisée, réalisée en forme de disque annulaire plat, qui repose sur le porte-lamelles (1),
b) une bague à cames (7) réalisée en forme de disque annulaire plat est montée de façon rotative dans la bague de levage (3), sur une face annulaire de laquelle sont agencées des cames (17) en forme de dents de scie, dans lequel
c) la bague de levage (3) et la bague à cames (7) sont couplées l'une à l'autre par au moins un ressort de traction (9) pouvant être tendu dans le sens de rotation de la bague de levage (3), et
d) le mouvement de pivotement des lamelles d'obturateur (14) peut être commandé par couplage avec la bague à cames (7), dans lequel les lamelles d'obturateur (14) sont reliées à un levier de pivotement (15) soumis à une précontrainte de ressort, de telle manière que celui-ci fasse pivoter les lamelles d'obturateur (14) dans la position ouverte lors de la rotation de la bague à cames (7) par un flanc avant (18) d'une came (17) contre la précontrainte de ressort et fasse pivoter les lamelles d'obturateur (14) dans la position fermée après dépassement d'une tête de came (20) par sa précontrainte de ressort.

2. Obturateur central selon la revendication 1, **caractérisé en ce que** la bague de levage (3) est réalisée en forme de roue dentée avec une couronne dentée (4) réalisée à son pourtour extérieur, qui est en prise avec un entraînement motorisé (5).

3. Obturateur central selon la revendication 1, **caractérisé en ce que** le flanc avant (18) des cames (17) dans le sens de rotation de la bague à cames (7) est abrupt.

4. Obturateur central selon la revendication 1, **caractérisé en ce que** la bague à cames (7) peut être bloquée par rapport au porte-lamelles (1).

5. Obturateur central selon la revendication 4, **caractérisé en ce qu'**au moins un cliquet (21, 22) bloquant la bague à cames (7) par appui sur un flanc avant (18) d'une came (17) dans le sens de rotation est monté de façon pivotante sur le porte-lamelles (1).

6. Obturateur central selon la revendication 5, **caractérisé en ce que** le cliquet (21, 22) est positionné de telle manière que, lors de l'appui sur un flanc avant (18) d'une came (17), il maintienne les lamelles d'obturateur (14) couplées à la bague à cames (7) dans une position fermant l'ouverture d'obturateur (2) et/ou dans une position basculée hors de l'ouverture d'obturateur (2).

7. Obturateur central selon la revendication 6, **caractérisé en ce qu'**il est prévu un cliquet de libération (21) pour la position fermée et un cliquet de maintien (22) pour la position ouverte des lamelles d'obturateur (14).

8. Obturateur central selon la revendication 5, **caractérisé en ce que** le mouvement de pivotement du cliquet (21, 22) peut être commandé de façon motorisée.
